# EUROPÄISCHE PATENTSCHRIFT

(11) **EP 0 887 376 B1**
(45) Veröffentlichungstag und Bekanntmachung des Hinweises auf die Patenterteilung: **09.03.2011**
(21) Anmeldenummer: 98250223.9
(22) Anmeldetag: 19.06.1998
(51) Int. Cl.: C08L 21/00, C08K 9/04, B01J 8/18, B05C 19/00

(54) **Verfahren zur Herstellung eines Kautschukadditivgranulats**
Process for the preparation of a granular rubber additif
Procédé de fabrication d'un additif granulaire de caoutchouc

(30) Priorität: 26.06.1997 DE 19727848
(43) Veröffentlichungstag der Anmeldung: 30.12.1998
(73) Patentinhaber: Schill + Seilacher "Struktol" GmbH, 22113 Hamburg (DE)
(72) Erfinder: Hensel, Manfred, 21255 Tostedt (DE)
(74) Vertreter: UEXKÜLL & STOLBERG

(56) Entgegenhaltungen:
- EP-A- 0 625 543
- DE-A- 2 123 214
- DE-A- 3 131 909
- DATABASE WPI Section Ch, Week 7647 Derwent Publications Ltd., London, GB; Class A60, AN 76-87648X XP002079990 & JP 51 112856 A (OUCHI SHINKO CHEM CO LTD), 5. Oktober 1976
- DATABASE WPI Section Ch, Week 8147 Derwent Publications Ltd., London, GB; Class A60, AN 81-86797D XP002079991 & SU 806 701 B (OVCHINNIKOV A A) , 23. Februar 1981
- DATABASE WPI Section Ch, Week 8451 Derwent Publications Ltd., London, GB; Class A60, AN 84-314844 XP002079992 & JP 59 196367 A (AJINOMOTO KK) , 7. November 1984
- DATABASE WPI Section Ch, Week 7526 Derwent Publications Ltd., London, GB; Class A31, AN 75-43252W XP002079993 & JP 49 098447 A (SUMITOMO CHEM IND KK) , 18. September 1974

## Beschreibung

Die Erfindung betrifft ein Verfahren zur Herstellung (einer Kautschukadditivgranulats) mittels eines Kautschukadditvgranulats Wirbelschichttechnologie.

Bei der Herstellung von Kautschukmischungen für die Gummiproduktion werden flüssige und feste Substanzen mit dem Kautschuk oder den Kautschuken vermischt. Die Feststoffe sind einerseits Substanzen mit Schmelz- oder Erweichungstemperaturen unterhalb der Verarbeitungstemperatur und andererseits Substanzen, die bei Verarbeitungstemperatur nicht geschmolzen oder erweicht vorliegen. Unter dem Aspekt der Löslichkeit lassen sich die einzumischenden Feststoffe unterteilen in gut kautschuklöslich, nicht-kautschuklöslich und diverse Zwischenformen.

Die Dispersion der Substanzen und insbesondere der Feststoffe ist um so schwieriger, je schlechter löslich sie sind und je höher der Schmelzpunkt bzw. je geringer die Erweichung bei Verarbeitungstemperatur ist.

Die Inkorporation und die Distribution, d.h. die Verteilung der Feststoffe wird maßgeblich von der Form bestimmt, in der sie als Handelsprodukt der kautschukverarbeitenden Industrie angeboten werden: feine Pulver bilden Staubwolken, die zudem noch häufig elektrostatisch aufgeladen sind, so daß es zu Einmischverlusten, ungesunden Staubentwicklungen und Arbeitsplatzverschmutzungen kommt. Oft bilden feine Pulver außerdem bei der Inkorporation Verpressungen, die mit den in der Kautschukmischung auftretenden Kräften nicht wieder aufzubrechen sind, so daß es zu mangelhaften Distributions- und Dispersionsqualitäten kommt.

Grobe Pulver bzw. Substanzgranulate weisen eher geringe Staubanteile auf und sind zumeist besser in den Kautschuk zu inkorporieren. Es muß jedoch gewährleistet sein, daß die in der Mischung auftretenden Kräfte in der Lage sind, die groben Partikel mechanisch ausreichend zu zerkleinern und zu verteilen.

Es ist Stand der Technik, feste Substanzen für die Kautschukherstellung in Silos zu lagern oder zumindest in Tagessilos vorzulegen. Von solchen Silos aus erfolgt eine Austragung durch Schnecken, Transportbänder und/oder pneumatische Förderung zur automatischen Verwiegung und von dort weiter zur Dosierung in das Mischaggregat. Bei der Lagerung wie auch beim Transport vom Hersteller zum kautschukverarbeitenden Betrieb neigen Pulver, insbesondere feine Pulver, in Abhängigkeit von der Stapelhöhe bzw. Schichtdicke zu Verbackungen, wodurch eine automatische Weiterverarbeitung ausgeschlossen wird.

Bei der Lagerung sind Pulver außerdem Umwelteinflüssen wie beispielsweise Feuchtigkeit, Sauerstoff, Kohlendioxid und Stickoxiden ungeschützt ausgesetzt, wodurch es zu Verbackungen oder sogar zu chemischen Umsetzungen kommt. Transportunfähigkeit und/oder eine Minderung der Wirkung des Zuschlagstoffes in der Kautschukmischung sind die Folge.

Beim Transport von Pulvern vom Silo zum Mischaggregat kann es ebenfalls zu Verbackungen, Verkrustungen, Brückenbildung in Rohren, Erhöhung des Staubanteils durch mechanische Zerkleinerung gröberer Bestandteile in den Pulvern sowie Abbrieb an den Transporteinrichtungen durch abrasive, d.h. abreibende Feststoffe bzw. Feststoffbestandteile kommen.

Bisher im Stand der Technik beschriebene Lösungsansätze der oben aufgezeigten Probleme verfolgen verschiedene Wege, die im folgenden kurz erläutert sind:
1. Die pulvrigen Substanzen werden mit verschiedenen Ölen, meist Mineralöl, und/oder anderen nicht polymeren Zutaten gebunden, gegebenenfalls einer besonderen physikalischen Behandlung unterzogen und dann als nicht staubendes, leicht fließendes Pulver, als Paste oder in Form von mehreren Millimeter großen Stäbchen, Zylindern, Flocken, Schuppen, Pastillen oder Kügelchen in den Handel gebracht. Diese Formen ergeben gegenüber der ursprünglichen feinpulvrigen Form unterschiedliche Vorteile: einige liegen in der Verwiegung und Dosierung, einige im geringeren Staubanteil und in verringerter elektrostatischer Aufladung, andere in schnellerer Einarbeitung und Verteilung, wieder andere im Schutz vor Feuchtigkeit und Kohlendioxid. Selten werden jedoch mehr als zwei der genannten möglichen Vorteile zugleich erreicht, so daß diese Produktformen nur noch in Sonderfällen als technisch ausreichend zu bezeichnen sind.
2. Die kautschukverarbeitende Industrie selbst stellt Vormischungen, sogenannte Batche, her. Dabei wird ein Kautschuk, der auch in den Hauptmischungen eingesetzt wird, mit pulvrigen oder gemäß Punkt 1 gebundenen Chemikalien und gegebenenfalls weiteren in der Kautschukverarbeitung üblichen Bestandteilen wie Ölen und Verarbeitungsadditiven gemischt und dann in den Hauptmischungen eingesetzt. Daraus resultieren jedoch oftmals Probleme bei der Lagerhaltung und der Dosierung, da solche Batche mit üblichen Verfahren keine automatische Dosierung erlauben. Außerdem bleiben die Probleme feinpulvriger bzw. gemäß Punkt 1 behandelter Substanzen bei der Verarbeitung erhalten, nur eben bei der Herstellung der Voranstelle der Hauptmischung.
3. Die Chemikalien werden in eine Matrix aus höhermolekularen vernetzten Materialien wie Faktisse oder mittels Dicarbonsäuren vernetzter epoxydierter Fettsäuretriglyceride, wie es in der DE 39 20 411 beschrieben ist, und ähnliche eingebunden. Dabei ist die Matrix unter den Transportbedingungen fest und möglichst staubfrei. Unter Einarbeitungsbedingungen schmilzt sie oder zerfällt mechanisch. Die verbleibenden Probleme sind hier Stabilität der Transportform, Silolagerung sowie automatischer Transport, Verwiegung und Dosierung. Außerdem ist die Verträglichkeit mit der Kautschukmischung nicht immer gegeben. Die Homogenität der Verteilung bei dieser Produktform wird maßgeblich von der Feinteiligkeit der pulvrigen Chemikalie bei der Einarbeitung in die Matrix bestimmt.
4. Die Chemikalien werden in einer Matrix aus elastomeren Polymerisaten mit thermoplastischen Eigenschaften gebunden und als Partikel in Form von Zylindern oder Würfeln von wenigen Millimetern Durchmesser der kautschukverarbeitenden Industrie angeboten. Die Matrix besteht zumeist aus Ethylen/vinylacetat-Copolymer und/oder Ethylen/Propylen-Co- oder -Terpolymer zusammen mit Öl und Dispergatoren auf Fettsäurebasis, wie es in der DE 21 23 214 beschrieben ist. Die Probleme der Stauberzeugung und der automatischen Dosierbarkeit sind damit gelöst. Jedoch gibt es noch immer Dispersionsprobleme. Diese resultieren entweder daraus, daß die zum Binden verwendeten Polymere nur mit einem Teil der in der kautschukverarbeitenden Industrie eingesetzten Kautschuke verträglich sind, und /oder daraus, daß die erzeugten Partikel zu hart sind für die Kautschukmischung, in die sie eingearbeitet werden sollen. Außerdem ist aufgrund der Partikelgröße eine längere Einarbeitungszeit erforderlich.
5. Lediglich eine Weiterentwicklung der Methode nach Punkt 3 ist es, die Substanz in einer polymerisierbaren Flüssigkeit zu dispergieren und diese dann, wie es in der EP-A-0 625 543 beschrieben ist, zu polymerisieren, insbesondere wenn, wie es im Patent beschrieben ist, die feste pulvrige Substanz zusammen mit einem sogenannten Esterweichmacher in natürliches oder epoxydiertes natürliches Fettsäuretriglycerid eingemischt, danach mehrbasige Säure in Form von Phosphorsäure zugegeben und die Masse so zu einem etwas plastischen, aber zerkrümelbaren Produkt vernetzt wird. Diese Form ist zwar staubfrei und gegenüber der Methode nach Punkt 4 mit geringerem Energieaufwand und besserer Homogenität, bezogen auf die einzumischende Chemikalienzubereitung, zu erreichen, hat aber die auch bei Punkt 3 genannten Nachteile.

JP-A-51 112856 (Derwent) offenbart einen Vulkanisationsbeschleuniger, der mit geschmolzenen Paraffinen vermischt wird.

SU-A-806701 (Derwent) offenbart eine granulierte Zusammensetzung auf Basis von hochdispergiertem Calciumhydroxid.

JP-A-59 196367 offenbart ein oberflächenmodifiziertes Pulvergranulat. Der Oberflächenmodifizierer umfaßt Aminosäurederivate, die die Oberfläche von pulverförmigen oder granularen Füllstoffen oder Pigmenten hydrophobisieren.

DE-A-31 31 90 offenbart ein Herstellungsverfahren einer körnigen organischen Kautschukchemikalie Zubereitung die u.a. als Vulkanisiermittel verwendet werden kann, bei dem eine Mischung aus einer organischen Kautschukchemikalie, einem flüssigen Polybuten, einem oberflächenaktiven Mittel und einem wasserlöslichen, makromolekularen Wirkstoff mit einer salzenthaltenden wässrigen Lösung in Kontakt gebracht wird, um die Mischung zu Härten und zu Granulieren.

Der vorliegenden Erfindung liegt demnach die Aufgabe zugrunde, ein Verfahren zur Herstellung einer Kautschukadditivzusammensetzung bereitzustellen, die zur Verwendung in Kautschuk oder Kautschukmischungen geeignet ist. Die Additive sollen leicht in den Kautschuk einarbeitbar sein und hohe Wirksamkeit im Kautschuk oder in der Kautschukmischung zeigen. Die Zusammensetzungen sollen sich ferner durch gute Verteilbarkeit in dem Kautschuk und gute Verträglichkeit mit gebräuchlichen Kautschuken und untereinander auszeichnen. Desweiteren soll die Formulierung der Zusammensetzung Transport- und Lagerstabilität sowie Verarbeitungsfreundlichkeit (keine Staubbildung, schnelle Verarbeitbarkeit) gewährleisten.

Eine Ausführungsform der Erfindung ist ein Verfahren zur Herstellung einer Additivzusammensetzung für Kautschuk und Kautschukmischungen, die mindestens eine feste, pulvrige Additivsubstanz (a) und mindestens ein Dispergiermittel (b) enthält, wobei die mindestens eine Additivsubstanz mit dem mindestens einen wachsartigen Dispergiermittel beschichtet ist, die Zusammensetzung als Granulat oder Mikrogranulat vorliegt und folgende Komponenten enthält:
(a) 90 bis 20 Gew.-% Additivsubstanz(en) und
(b) 10 bis 80 Gew.-% Dispergiermittel,
wobei das Verfahren dadurch gekennzeichnet ist, daß die Additivsubstanz(en) mit dem/den Dispergiermittel(n) mittels eines Wirbelschichtverfahrens beschichtet wird/werden, wobei in einem ersten Schritt mit einer oder mehreren pulvrigen Additivsubstanz(en) in einem Wirbelschichtreaktor ein Wirbelbett erzeugt wird und in einem zweiten Schritt ein oder mehrere Dispergiermittel als Beschichtungsmaterial zu dem Wirbelbett gegeben werden, wodurch.die Pulverkörner beschichtet werden.

Bevorzugte Ausführungsformen der Erfindung sind Gegenstand der Unteransprüche.

Die Additivsubstanzen sind aus Kautschuk-Chemikalien und -Zuschlagstoffen ausgewählt. Dabei sind Mastikationschemikalien, Vulkanisationschemikalien, Alterungs- und Ermüdungsschutzchemikalien,Füllstoffe, Pigmente, Weichmacher, Faktisse, Treibmittel, Haftmittel und sonstige Hilfsmittel, insbesondere Vulkanisationschemikalien wie Vulkansiermittel, Vulkanisationsbeschleuniger und -verzögerer und Beschleunigeraktivatoren als Bestandteile der erfindungsgemäßen Zusammensetzungen von Interesse.

Insbesondere sind solche Additivsubstanzen für die Verwendung in dem erfindungsgemäßen Verfahren vorgesehen, die einen hohen Schmelzpunkt besitzen bzw. dazu neigen, sich beim Einmischen aufzuladen oder eine große spezifische Oberfläche wie beispielsweise hochaktives Zinkoxid besitzen und/oder beim Einmischen in Kautschuke nur in kleinen Mengen eingesetzt werden.

Das als Beschichtungsmaterial eingesetzte Dispergiermittel ist aus wachsartigen Dispergiermitteln, die beispielsweise Fettsäuren, Fettalkohole, Produkte aus der Umsetzung von Fettsäuren mit Alkoholen sowie Fette, insbesondere Wollfett, umfassen, ausgewählt.

Zur Beschichtung der Additivsubstanzen eignen sich Fettsäuren der Kettenlängen C₁₂-C₃₀, Fettalkohole der Kettenlängen C₁₂-C₃₀ und durch Veresterung der vorgenannten Säuren und Alkohole hergestellte Esterwachse, Ester von Fettsäuren der Kettenlängen C₁₂-C₃₀ mit Diolen und/oder Polyolen wie z.B. Ethylenglykol, Polyethylenglykol, Glycerin, Trimethylolpropan, Pentaerythrit, Dipentaerythrit und dergleichen, ferner Esterwachse natürlichen Ursprungs wie z.B. Carnaubawachs, Bienenwachs und Montanwachs.

Desweiteren eignen sich zur Beschichtung der Additivsubstanzen Wollwachs und verwandte Produkte wie z.B. Wollfett-Fettsäuren, Wollfettalkohole sowie deren Destillationsrückstände.

Ferner sind Paraffinwachse und oxidierte Paraffine (Oxidwachse), Amide von Fettsäuren der Kettenlängen C₁₂-C₃₀ wie z.B. Stearinsäureamid, Erucasäureamid und deren N-Substitutionsprodukte wie beispielsweise Stearinsäureethanolamid als Beschichtungsmaterialien für die erfindungsgemäßen Additivsubstanzen geeignet.

Schließlich stellen auch Emulgatoren wie beispielsweise Fett- oder Oxoalkoholethoxylate, Seifen, Sulfonate sowie Lecithin geeignete Beschichtungsmaterialien dar.

Zur Beschichtung können auch Kombinationen der vorgenannten Substanzen verwendet werden.

Vorzugsweise kommen als Beschichtungsmittel Substanzen bzw. Substanzkombinationen in Betracht, die bei Raumtemperatur eine wachsartige Konsistenz besitzen und bei ca. 40 bis 100°C schmelzen und somit das Einmischen in den Kautschuk erleichtern und die Verteilung der Chemikalien verbessern.

Eine besonders geeignete Additivsubstanz ist somit Zinkoxid und ein besonders geeignetes Dispergiermittel ist Wollfett bzw. eine Kombination aus Wollfett und Fettsäureestern.

Die erfindungsbemäße hergestellte Zusammensetzung umfaßt, bezogen auf ihre Gesamtmenge, 90 bis 20 Gew.-% Additivsubstanz(en) und 10 bis 80 Gew.-% Dispergiermittel, bevorzugter 90 bis 40 Gew.-% Additivsubstanz(en) und 10 bis 60 Gew.-% Dispergiermittel und am meisten bevorzugt 85 bis 65 Gew.-% Additivsubstanz(en) und etwa 15 bis 35 Gew.-% Dispergiermittel.

Die erfindungsgemäße hergestellte Zusammensetzung liegt als Granulat oder Mikrogranulat vor, wobei die Granulatpartikel bzw. Mikrogranulatpartikel vorzugsweise eine Größe von 0,1 bis 10 mm und bevorzugter von 2 bis 5 mm aufweisen.

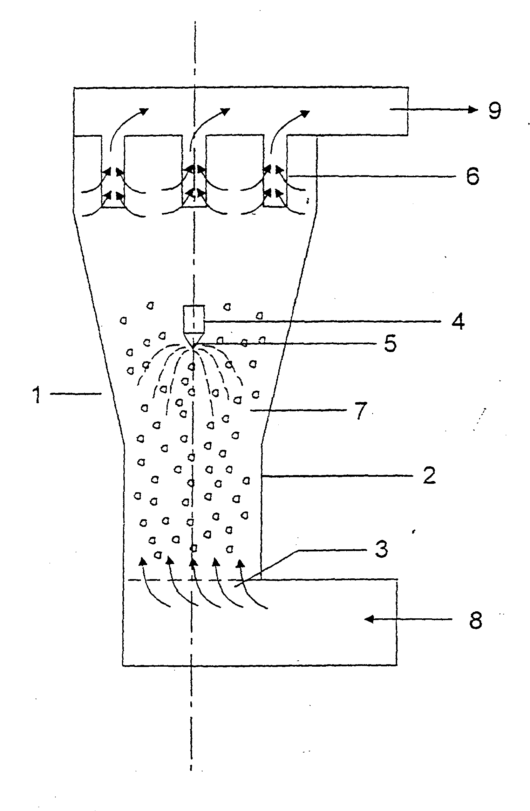

Eine Ausführungsform der Erfindung wird anhand der Figur 1 erläutert, die ein Schnittbild eines für das erfindungsgemäße Verfahren geeigneten Wirbelschichtreaktors (1) zeigt.

Die Herstellung des erfindungsgemäßen Granulats erfolgt in einem Wirbelschichtreaktor, wie er beispielsweise in Figur 1 dargestellt ist. In einem ersten Schritt des erfindungsgemäßen Verfahrens wird im Wirbelschichtreaktor in der Wirbelkammer (2) mit der/den pulverförmigen oben genannten Additivsubstanz(en) durch Luftzufuhr (8) mit für die jeweilige Reaktorgröße geeigneten Strömungsgeschwindigkeiten ein stabiles Wirbelbett (7) erzeugt.

Bevorzugt sind dabei Pulver, die feingepulvert vorliegen und vorzugsweise einen Durchmesser von durchschnittlich weniger als 100 µm aufweisen.

Die zugeführte Luft wird nach dem Durchströmen der Wirbelkammer über einen Filter (6) aus dem Reaktor abgeführt (9), so daß kein Material mit ausgetragen wird.

In einem zweiten Schritt des erfindungsgemäßen Verfahrens wird dann das in diesem Falle flüssige (ggf. zuvor aufgeschmolzene) Beschichtungsmaterial (4) über eine Versprühdüse (5) in das Wirbelbett eingeführt, wodurch die Pulverkörner kontrolliert beschichtet werden.

Eine Zugabe des Dispergiermittels in Pulverform gleichzeitig mit der/den Additivsubstanz(en) ist ebenfalls möglich, wenn das Dispergiermittel durch Zuführen von Heißluft aufgeschmolzen wird.

In einem optionalen dritten Schritt des erfindungsgemäßen Verfahrens erfolgt eine Agglomeration der einzelnen beschichteten Pulverkörner bis zum gewünschten Agglomeratdurchmesser.

Schließlich wird das fertige Produkt, d.h. das erfindungsgemäße Granulat, im letzten Schritt des Verfahrens aus dem Reaktorraum ausgetragen.

Das mittels des erfindungsgemäßen Verfahren erhaltene Granulat ist staubfrei und somit verarbeitungsfreundlich. Die Granulat-Partikel sind stabil und zeigen keine Frakturen oder Verbackungen während des Transports, während der Lagerung in Säcken oder Silos oder während der automatischen Verwiegung oder Dosierung.

Die erfindungsgemäßen hergestallten Additisammensetzung finden in Kautschuken oder Kautschukmischungen, insbesondere für die Gummiherstellung Anwendung.

Das erfindungsgemäße Beschichtungsmaterial ist in dem Kautschukmaterial, in das das Granulat eingearbeitet werden soll, gut löslich und zeigt einen dispergierenden Effekt. Überdies ist es mit allen in der kautschukverarbeitenden Industrie gebräuchlichen Kautschuken verträglich. Es hat daher keinerlei schädliche Wirkung auf den Mischprozeß, die Mischung, den Formgebungs- und Vulkanisierprozess und auf das Kautschukendprodukt.

Der Einfluß ist deutlich positiv: Da das Beschichtungsmaterial selbst als Dispergieradditiv und in vielen Kautschuken auch als Fließadditiv wirkt, wird die Dispersion in der gesamten Kautschukmischung verbessert. Dies trägt auch zu einer Erleichterung des späteren Formgebungsprozesses bei.

Neben der guten Verträglichkeit des Beschichtungsmaterials zu den Kautschuken ist dies auch eine Folge des erfindungsgemäßen Aufbaus der Granulate. Als beispielsweise Agglomerate feinster Partikel werden die Granulate bei der Einarbeitung in Kautschukmischungen gleich nach ihrer Inkorporierung und Benetzung durch das Kautschukmaterial selbst durch so geringe Scherkräfte, wie sie beispielsweise in weichen Mischungen auf einem Mischwalzwerk vorherrschen, zu den deutlich kleineren aber immer noch Beschichtung tragenden Primärpartikeln durch Aufschmelzen des Dispergators abgebaut und optimal in der Mischung verteilt (Dispersion). Aufgrund der Löslichkeit der Beschichtung zieht die Beschichtung nach und nach in das Kautschukmaterial ein und läßt das feine Pulverkörnchen mit ungestörter Aktivität optimal verteilt zurück.

Die im Vergleich zu polymergebundenen Chemikalien geringere Größe der Granulatpartikel ist ein Grund, weshalb die Einarbeitung der erfindungsgemäßen Zusammensetzungen deutlich schneller erfolgen kann. Da diese Granulate im Vergleich zu polymergebundenen Chemikalien auch keine Elastizität zeigen, gibt es auf der Mischwalze zudem keine Materialverluste durch wegspringende Granulatpartikel.

Die schnellere und leichtere Einarbeitung trägt dazu bei, daß der Energieverbrauch bei der Herstellung von Kautschukmischungen und -produkten unter Verwendung der erfindungsgemäß hergestellten Additive gegenüber der Methode der polymergebundenen Chemikalien bedeutend geringer ist.

Die Dispersionsgüte ist wegen des oben geschilderten Einarbeitungsmechanismus optimal und auch bei schwierigen Kautschukmischungen und schwierig zu dispergierenden Chemikalien besser als bei allen anderen Chemikalienzubereitungen.

Da das Beschichtungsmittel mit allen in der kautschukverarbeitenden Industrie verwendeten Kautschuken verträglich ist, gibt es auch keine Probleme mit Polymerphasen oder mit unverträglich umhüllten Chemikalien, ein Effekt der ebenfalls zu den vorteilhaften Eigenschaften der unter Verwendung der erfindungsgemäßen Zusammensetzungen erhaltenen Kautschuke beiträgt.

Die Erfindung ist im folgenden anhand eines Ausführungsbeispiels näher beschrieben. Es sind in den Rezepturen jeweils die Gewichtsteile bezogen auf 100 Gewichtsteile Kautschuk in der Mischung genannt.

### Beispiel

Im folgenden ist ein Zinkoxid-Granulat und seine Herstellung sowie der technische Vorteil seiner Einarbeitung in eine Kautschukmischung gegenüber unbehandeltem Zinkoxid-Pulver beschrieben.

Zinkoxid ist eine Kautschukchemikalie, die bei der Verarbeitung nicht schmilzt und in Kautschuk nicht löslich ist. Zudem stellt die optimale Dispersion des Zinkoxids die Basis für eine optimal homogene Vernetzung der Kautschuke mittels Schwefel und verschiedenen Beschleunigern dar. Zinkoxid ist eine der am schwersten zu dispergierenden Kautschukchemikalien. Eine unzureichende Dispersion ist im Werteniveau der physikalischen Daten des Vulkanisats, wie sie in Tabelle 3 aufgeführt sind, zu erkennen.

Das eingesetzte Zinkoxid wies eine besonders große Oberfläche auf: "SILOX ACTIF" der Firma Silox S.A., Belgien, mit einer Oberfläche, gemessen nach BET, von 42 m²/g. Normalerweise für Kautschukmischungen verwendete Zinkoxid-Typen weisen Oberflächen von 2 bis 4 m²/g auf. Es ist Stand der Technik, solche sogenannten "aktiven" Zinkoxid-Typen in unbehandelter Form in Kautschukmischungen für die Gummiherstellung einzusetzen, um die Gesamtmenge an Zinkoxid deutlich zu reduzieren. Allerdings ist die Einarbeitung und die homogene Dispersion solcher Zinkoxide äußerst schwierig. Gerade hieran lassen sich die Vorteile der Erfindung demonstrieren.

Das Zinkoxid war laut Analysenzertifikat zu 95,5 % rein, hatte einen Trockenverlust bei 105 °C von 0,71 %, einen Siebrückstand (44 µm-Sieb) von 0,08 %, ein Schüttgewicht von 800 g/l und einen wasserlöslichen Anteil von 0,8 %.

Dieses Pulver wurde erfindungsgemäß in einem Wirbelschichtreaktor, wie er beispielsweise in Figur 1 dargestellt ist, beschichtet. Dabei waren bei (Gesamt-)Einsatzmengen an Zinkoxid und Beschichtungsmaterial von 1250 bis 2500 g und Luftströme von 50 bis 70 m³ pro Stunde nötig. Es wurde ein 66 %iger Substanzgehalt, d.h. ZnO-Gehalt, eingestellt. Als Beschichtungsmaterial wurde eine Wollfett/Fettsäureester-Mischung verwendet.

Das Granulat wurde in eine praxisnahe Naturkautschuk-Polybutadien-Verschnittmischung (SMR 10, Buna CB 10) eingearbeitet. Dabei wurden verschiedene Mengen an Zinkoxid-Granulat unter der Bezeichnung erfindungsgemäße Zinkoxidpräparation eingesetzt, um die Wirksamkeit des Zinkoxids, die auf einer optimalen Dispersion basiert, zu zeigen. Die drei gewählten Mengen an Zinkoxidpräparation entsprechen 3, 2 und 1 Massenanteilen Zinkoxid zusammen mit mit 1,8, 1,2 und 0,6 Massenteilen der Wollfett/Ester-Mischung pro 100 Teile Kautschuk (abgekürzt: phr). Ferner wurden als chemisches Abbaumittel für Naturkautschuk eine aromatische Disulfid/Fettsäureester-Mischung (STRUKTOL A 82), als fester verstärkender Füllstoff Ruß (STATEX N-550), als Alterungsschutzmittel Isopropyl-Phenyl-p-phenylendiamin (IPPD) und polymerisiertes Trimethyl-Dihydrochinolin (TMQ), das Ozonschutzwachs Protector G 32 (mikrokristallines Paraffinwachs), Stearinsäure, eine Schwefelzubereitung (STRUKTOL SU 109) und als Vulkanisationsbeschleuniger N-tert. butyl-2-benzothiazolsulfenamid (TBBS) und Diphenylguanidin (DPG) eingesetzt.

Tabelle 1 gibt eine Übersicht der hergestellten Mischungen.

**Tabelle 1:**

| Komponente | | Mischung 1 | Mischung 2 | Mischung 3 | Mischung 4 |
|---|---|---|---|---|---|
| Naturkautschuk SMR 10 | | 80 | 80 | 80 | 80 |
| Polybutadienkautschuk Buna CB 10 * ⁽¹⁾ | | 20 | 20 | 20 | 20 |
| STRUKTOL A 82* ⁽²⁾ | | 0,6 | 0,6 | 0,6 | 0,6 |
| Ruß STATEX N-550* ⁽³⁾ | | 42 | 42 | 42 | 42 |
| AlterungsschutzmittelIPPD | | 3 | 3 | 3 | 3 |
| Alterungsschutzmittel TMQ | | 2 | 2 | 2 | 2 |
| Ozonschutzwachs Protector G 32* ⁽⁴⁾ | | 3,5 | 3,5 | 3,5 | 3,5 |
| Stearinsäure | | 2 | 2 | 2 | 2 |
| Zinkoxid SILOX Actif* (5) | | 3 | 0 | 0 | 0 |
| erfindungsgemäße Zinkoxidpräparation | | 0 | 4,8 | 3,2 | 1,6 |
| Schwefelpräparation STRUKTOL SU 109* ⁽²⁾ 1,9 | | 1,9 | 1,9 | 1,9 | 1,9 |
| Vulkanisationsbeschleuniger TBBS | | 1,5 | 1,5 | 1,5 | 1,5 |
| Vulkanisationsbeschleuniger DPG | | 0,3 | 0,3 | 0,3 | 0,3 |
| | | | | | |
| * Handelsproduktbezeichnungen | | | | | |
| | Hersteller / Lieferant | | | | |
| ⁽¹⁾ | Bayer AG, Leverkusen | | | | |
| ⁽²⁾ | Schill+Seilacher, Hamburg | | | | |
| ⁽³⁾ | Columbian Carbon, Hannover | | | | |
| ⁽⁴⁾ | Fuller | | | | |
| ⁽⁵⁾ | Siox S.A., Belgien | | | | |

In der folgenden Tabelle 2 sind die das Vernetzungverhalten charakterisierenden relevanten physikalischen Daten aufgeführt, die einen Rückschluß auf die Distribution bzw. Dispersion der Additivsubstanzen zulassen.

Die Mischungen ergaben bei gleicher Mischungsviskosität von ML(1+4)100 = 48 gemäß DIN 53523 folgende in Tabelle 2 aufgeführte Unterschiede in der Vernetzungscharakteristik gemäß DIN 53529, gemessen mit dem Rheometer MDR der Firma Alpha Technology bei 150°C.

**Tabelle 2:**

| Eigenschaft | Mischung 1 | Mischung 2 | Mischung 3 | Mischung 4 |
|---|---|---|---|---|
| Drehmoment ML [dNm] | 1,86 | 1,9 | 1,9 | 1,96 |
| Drehmoment MH[dNm] | 17,08 | 17,18 | 17,14 | 16,47 |
| Zeit nach 10 % Drehmomentanstieg [min] | 2,1 | 2,32 | 2,33 | 1,96 |
| Zeit nach 90 % Drehmomentanstieg [min] | 5,02 | 5,29 | 5,13 | 4,13 |

Den MH-Werten von Tabelle 2 entnimmt man, daß Mischung 2 im Vergleich zu Mischung 1 bei gleichem Gehalt an Zinkoxid mit höherer Vernetzungsausbeute reagiert, und eine Absenkung der effektiven Zinkoxidmenge auf 2 phr in Mischung 3 bereits eine ähnliche Vernetzungsausbeute wie in Mischung 1 erzielt. dies ergibt sich beispielsweise aus den MH-Meßwerten. (Die Mengenangaben für die erfindungsgemäße Zinkoxidpräparation in Tabelle 1 umfassen wie oben dargelegt bei Mischung 2 die Komponenten 3,0 ZnO und 1,8 Dispergiermittel, bei Mischung 3 die Komponenten 2,0 ZnO und 1,2 Dispergiermittel, und bei Mischung 4 die Komponenten 1,0 ZnO und 0,6 Dispergiermittel.)

Auch die Shore-Härte gemäß DIN 53505 und der Druckverformungsrest gemäß DIN 53517 zeigen, wie Tabelle 3 zu entnehmen ist, daß die Vernetzungsdichte der Mischung 2 deutlich höher als die der Mischung 1 ist. Dies wiederum zeigt, daß auch die Verteilung der zugegebenen Additivsubstanzen bei der erfindungsgemäß hergestellten Mischung 1 deutlich besser als bei der Vergleichsmischung 2 gewesen ist. Eine Absenkung der effektiven Zinkoxidmenge auf 2 phr in Mischung 3 ergibt ähnliche Werte wie für Mischung 1. Eine Absenkung der effektiven Zinkoxidmenge auf 1 phr in Mischung 4 führt jedoch zu einer geringeren Vernetzungsdichte.

**Tabelle 3:**

| Eigenschaft | Mischung 1 | Mischung 2 | Mischung 3 | Mischung 4 |
|---|---|---|---|---|
| Shore-Härte A in % relativ zu Mischung 1 | 100 | 102 | 100 | 98 |
| Druckverformungsrest [%] 24 Stunden, 70 °C, 25 % Kompression | 16 | 15,5 | 16 | 20 |

Die Einarbeitungszeit der erfindungsgemäß hergestellten zinkoxidpräparationen, optisch ermittelt beim Einmischen auf dem Mischwalzwerk, war im Vergleich zu unpräpariertem Zinkoxid deutlich geringer. Zwischen den Mischungen 2 bis 4 waren keine Unterschiede zu erkennen, wie die Werte in Tabelle 4 zeigen:

**Tabelle 4: ,**

| Eigenschaft | Mischung 1 | Mischung 2 | Mischung 3 | Mischung 4 |
|---|---|---|---|---|
| Einmischzeit, optisch ermittelt in % relativ zu Mischung 1 | 100 | 51 | 45 | 44 |

Die erfindungsgemäß hergestellte Präparation des Zinkoxids führt somit zu einer bedeutsamen Reduzierung der Einmischizeit und, wie an der Vernetzungscharakteristik zu erkennen ist, zu einer feinteiligeren Dispersion und homogeneren Verteilung der zugesetzten Additivsubstanz.

## Patentansprüche

1. Verfahren zur Herstellung einer Additivzusammensetzung für Kautschuk und Kautschukmischungen, die mindestens eine feste, pulvrige Additivsubstanz(en) (a) und mindestens ein Dispergiermittel (b) enthält, wobei die mindestens eine Additivsubstanz mit dem mindestens einen wachsartigen Dispergiermittel beschichtet ist, die Zusammensetzung als Granulat oder Mikrogranulat vorliegt und folgende Komponenten enthält:
(a) 90 bis 20 Gew.-% Additivsubstanz(en) und
(b) 10 bis 80 Gew.-% Dispergiermittel,
**dadurch gekennzeichnet, daß** die Additivsubstanz(en) mit dem/den Dispergiermittel(n) mittels eines Wirbelschichtverfahrens beschichtet wird/werden, wobei in einem ersten Schritt mit einer oder mehreren pulvrigen Additivsubstanzen in einem Wirbelschichtreaktor ein Wirbelbett erzeugt wird und in einem zweiten Schritt ein oder mehrere Dispergiermittel als Beschichtungsmaterial zu dem Wirbelbett gegeben werden, wodurch die Pulverkörner beschichtet werden.

2. Verfahren nach Anspruch 1, **dadurch gekennzeichnet, daß** die Additivsubstanz(en) (a) ausgewählt ist(sind) aus Kautschuk-Chemikalien und -Zuschlagstoffen, insbesondere Mastikationschemikalien, Vulkanisationschemikalien, Alterungs- und Ermüdungsschutzchemikalien, Füllstoffen, Pigmenten, Weichmachern, Faktissen, Treibmitteln, Haftmitteln und sonstigen Hilfsmitteln.

3. Verfahren nach Anspruch 2, **dadurch gekennzeichnet, daß** die Vulkanisationschemikalien Vulkanisiermittel, Vulkanisationsbeschleuniger und -verzögerer und Beschleunigeraktivatoren umfassen.

4. Verfahren nach einem der vorhergehenden Ansprüche, **dadurch gekennzeichnet, daß** das wachsartige Dispergiermittel aus Fettsäuren, Fettalkoholen, Produkten aus der Umsetzung von Fettsäuren mit Alkoholen sowie Fetten, insbesondere Wollfett ausgewählt ist.

5. Verfahren nach einem der vorhergehenden Ansprüche, **dadurch gekennzeichnet, daß** das Dispergiermittel bei Raumtemperatur eine wachsartige Konsistenz besitzt und bei Temperaturen von 40 bis 100°C schmilzt.

6. Verfahren nach Anspruch 1, **dadurch gekennzeichnet, daß** die Additivsubstanz (a) Zinkoxid ist und das Dispergiermittel (b) Wollfett und Fettsäureester enthält.

7. Verfahren nach einem der vorhergehenden Ansprüche, **dadurch gekennzeichnet, daß** die Granulatpartikel eine Größe von 0.1 bis 10 mm, insbesondere von 2 bis 5 mm aufweisen.

8. Verfahren nach einem der vorhergehenden Ansprüche, die bezogen auf die Zusammensetzung folgende Komponenten enthält:
a) 90 bis 40 Gew. -% Additivsubstanz(en) und
b) 10 bis 60 Gew. -% Dispergiermittel.

9. Verfahren nach einem der vorhergehenden Ansprüche, die bezogen auf die Zusammensetzung folgende Komponenten enthält:
a) 85 bis 65 Gew.-%, insbesondere etwa 66 Gew.-% Additivsubstanz(en) und
b) 15 bis 35 Gew.-%, insbesondere etwa 34 Gew.-% Dispergiermittel.

10. Verfahren nach einem der vorhergehenden Ansprüche, **dadurch gekennzeichnet, daß** in einem dritten Schritt eine Agglomeration der beschichteten Pulverkörner bis zu einem gewünschten Agglomeratdurchmesser erfolgt.

## Claims

1. Process for the production of an additive composition for rubber and rubber mixtures, said additive composition comprising at least one solid, powdery additive substance (a) and at least one dispersant (b), wherein the at least one additive substance is coated with the at least one wax-like dispersant, the composition is present as granulate or microgranulate and comprises the following components:
(a) 90 to 20 wt.-% additive substance(s), and
(b) 10 to 80 wt.-% dispersant(s),
**characterized in that** the additive substance(s) is/are coated with the dispersant(s) by means of a fluidized bed process, wherein in a first step, a fluidized bed is produced with one or more powdery additive substances in a fluidized bed reactor, and in a second step, one or more dispersants are added to the fluidized bed as coating material, whereby the powder grains are coated.

2. Method according to claim 1, **characterized in that** the additive substance(s) (a) is/are selected from rubber chemicals and rubber aggregates, in particular mastication chemicals, vulcanisation chemicals, anti-aging and fatigue-preventing chemicals, fillers, pigments, plasticizers, factices, propellants, adhesives and other auxiliary agents.

3. Process according to claim 2, **characterized in that** the vulcanisation chemicals comprise vulcanisation agents, vulcanisation accelerators and vulcanisation retarders and accelerator activators.

4. Process according to any of the preceding claims, **characterized in that** the wax-like dispersant is selected from fatty acids, fatty alcohols, products from the reaction of fatty acids with alcohols, and fats, in particular wool fat .

5. Method according to any of the preceding claims, **characterized in that** the dispersant has a wax-like consistency at room temperature and melts at temperatures of from 40 to 100 °C.

6. Method according to claim 1, **characterized in that** the additive substance (a) is zinc oxide and the dispersant (b) comprises wool fat and fatty acid ester.

7. Method according to any of the preceding claims, **characterized in that** the granulate particles have a size of from 0.1 to 10 mm, in particular of from 2 to 5 mm.

8. Method according to any of the preceding claims, which, relative to the composition, contains the following components:
(a) 90 to 40 wt.-% additive substance(s) and
(b) 10 to 60 wt.-% dispersant(s).

9. Method according to any of the preceding claims, which, relative to the composition, contains the following components:
(a) 85 to 65 wt.-%, in particular about 66 wt.-% additive substance(s), and
(b) 15 to 35 wt.-%, in particular about 34 wt.-% dispersant(s).

10. Method according to any of the preceding claims, **characterized in that** in a third step, an agglomeration of the coated powder grains up to a desired agglomerate diameter occurs.

## Revendications

1. Procédé de fabrication d'une composition d'additif pour le caoutchouc et des mélanges de caoutchouc, qui contient au moins une ou des substances additives solides pulvérulentes (a) et au moins un agent dispersant (b), dans lequel la au moins une substance additive est revêtue par le au moins un agent dispersant de type cireux, la composition se présente sous la forme de granules ou de microgranules et contient les composants suivants :
(a) 90 à 20 % en poids de substance(s) additive(s) et
(b) 10 à 80 % en poids d'agent dispersant,
**caractérisé en ce que** la ou les substances additives est ou sont revêtues par le ou les agents dispersants au moyen d'un procédé à lit fluidisé, dans lequel un lit fluidisé est produit, dans une première étape, avec une ou des substances additives pulvérulentes dans un réacteur à lit fluidisé et un ou des agents dispersants sont ajoutés comme matériau de revêtement, dans une deuxième étape, au lit fluidisé, ce qui permet de revêtir les grains de poudre.

2. Procédé selon la revendication 1, **caractérisé en ce que** l'on choisit la ou les substances additives (a) parmi des produits chimiques et des adjuvants pour caoutchouc, en particulier des produits chimiques de mastication, des produits chimiques de vulcanisation, des produits chimiques de protection contre le vieillissement et la fatigue, des charges, des pigments, des plastifiants, des caoutchoucs factices, des agents moussants, des agents adhésifs et d'autres agents auxiliaires.

3. Procédé selon la revendication 2, **caractérisé en ce que** les produits chimiques de vulcanisation comprennent des agents de vulcanisation, des accélérateurs et des retardateurs de vulcanisation et des activateurs d'accélération.

4. Procédé selon l'une quelconque des revendications précédentes, **caractérisé en ce que** l'agent dispersant de type cireux est choisi parmi des acides gras, des alcools gras, des produits issus de la réaction d'acides gras avec des alcools, ainsi que des graisses, en particulier du suint.

5. Procédé selon l'une quelconque des revendications précédentes, **caractérisé en ce que** l'agent dispersant possède une consistance cireuse à température ambiante et fond à des températures de 40 à 100 °C.

6. Procédé selon la revendication 1, **caractérisé en ce que** la substance additive (a) est l'oxyde de zinc et l'agent dispersant (b) contient du suint et des esters d'acides gras.

7. Procédé selon l'une quelconque des revendications précédentes, **caractérisé en ce que** les particules granulaires présentent une taille de 0,1 à 10 mm, en particulier de 2 à 5 mm.

8. Procédé selon l'une quelconque des revendications précédentes, qui contient, par rapport à la composition, les composants suivants :
a) 90 à 40 % en poids de substance(s) additive(s) et
b) 10 à 60 % en poids d'agent dispersant.

9. Procédé selon l'une quelconque des revendications précédentes, qui contient, par rapport à la composition, les composants suivants :
a) 85 à 65 % en poids, en particulier environ 66 % en poids de substance(s) additive(s) et
b) 15 à 35 % en poids, en particulier environ 34 % en poids d'agent dispersant.

10. Procédé selon l'une quelconque des revendications précédentes, **caractérisé en ce que**, dans une troisième étape, on effectue une agglomération des grains de poudre revêtus jusqu'à obtenir un diamètre d'agglomérat souhaité.
